# EUROPEAN PATENT SPECIFICATION

(11) **EP 0 859 303 B1**
(45) Date of publication and mention of the grant of the patent: **02.05.2003**
(21) Application number: 98301077.8
(22) Date of filing: 13.02.1998
(51) Int. Cl.: G05D 23/02

(54) **Thermostatic valve control head**
Einstellvorrichtung für Thermostatventil
Tête de réglage pour robinet thermostatique

(30) Priority: 14.02.1997 GB 9703137
(43) Date of publication of application: 19.08.1998
(73) Proprietor: Pegler Limited, Doncaster, South Yorkshire DN4 8DF (GB)
(72) Inventor: Dawson, Phillip, Doncaster, South Yorkshire, DN11 9UE (GB); Virgo, Roger, Bognor Regis, West Sussex, PO22 8EN (GB)
(74) Representative: Hamilton, Alistair

(56) References cited:
- DE-A- 3 521 965
- FR-A- 2 343 187
- FR-A- 2 373 006

## Description

The present invention relates to a thermostatic valve control head, particularly for a radiator valve.

Central heating systems typically comprise a boiler for heating water, and a plurality of water/air heat exchangers (normally, but misleadingly, called radiators: this convention will be used herein) and a system of pipes through which hot water is pumped from the boiler to the radiators and back again.

It is conventional for each radiator to have a water inlet and a water outlet passage, each passage being provided with a flow-control valve. One such valve is set by an installer to limit the maximum flow through the radiator, while the other is provided with a user control by means of which the flow of water through the radiator can be modified in order that its heat output can be controlled.

In a simple heating system, the user control valve may be provided with a manual control by means of which the user can fix the rate of flow through the radiator. This allows only limited control over the amount of heat output by the radiator, and controls such as these are often used as on/off controls, since their intermediate settings are often difficult for a user to control.

It is widely recognised that such simple controls are in many cases unsatisfactory. They do not allow a constant temperature to be maintained in a space, thereby leading to inefficient use of energy and discomfort for people occupying the space.

A conventional solution to this problem is to provide each radiator with a valve which controls the flow of water through the radiator in response to changes in ambient temperature, the flow being increased as the temperature falls. Such valves (known as thermostatic valves) typically have a user control by means of which the temperature which the user desires to achieve can be controlled.

A thermostatic valve typically has two principal interconnected components; a flow valve and a control head. The flow valve has a body which is connected at the inlet or the outlet of a radiator. An actuating pin projects from the body, and operates such that flow of water through the valve is restricted when the pin is urged into the body against a restoring spring force. Within the control head, most typically, a sensing element is provided which undergoes linear expansion as its temperature increases. The expansion acts mechanically to operate the pin, so restricting flow as temperature increases. It has been found difficult to achieve a satisfactory compromise between ensuring that the control head responds sufficiently quickly to changes in ambient temperature (which requires there to be unobstructed air-flow around the sensing element) and the preference for a compact and visually attractive structure.

German patent application number DE-A-3521965 discloses a thermostat for radiator valves comprising a cylindrical plastic casing. The casing may be firmly attached to an expansion system. The thermostat also has a rotatable adjustment cap with a graduation carrier attached to the casing.

According to the invention there is provided a control head for a thermostatic valve comprising:
a housing, within which is contained a sensing element (100) which sensing element has a body and an actuating member, which actuating member is operative to move along an axis (A) with respect to the body in response to change in ambient temperature,
a carrier (102) within the housing,
and a connecting means (42) whereby the housing can be secured to a flow valve,
in which control head the actuating member of the sensing element (100) is operatively connected to the carrier and the actuating member of the sensing element (100) projects from the body such that it can move the carrier (102) to operate a flow valve to which the control head is attached,
and in which control head a user control is rotatable about an axis parallel to or coaxial with the operating axis (A) of the sensing element, such rotation causing linear movement of the carrier parallel to the operating axis but causing substantially no axial movement of the housing with respect to the connecting means,
characterised in that the control head has a sub-assembly including an inner housing (106) and an outer housing (108),
wherein the inner housing (106) is secured to the outer housing (108), and the inner and outer housings locate the carrier (102) and sensing element (100) in place in the sub-assembly, wherein the subassembly is locatable in the housing.

Thus, a user can rotate the control to cause linear movement of the temperature sensor, and so effect a variation in the desired temperature. That much is well known to anyone skilled in the art. In the present invention, such adjustment does not give rise to axial movement of the housing or of the user control, as is conventional. This arrangement avoids the problem of such axial movement giving rise to complications in arriving at a satisfactory design from both an aesthetic and a functional point of view.

The user control may be constituted by a part of the housing. For example, the housing may comprise a body and a cover component, interconnected for mutual rotation.

Most preferably, a multiplicity of slots is formed in the housing adjacent the sensing element. Advantageously, further slots are provided whereby a flow of air through the housing can be established either in an axial direction or in a direction transverse to the axis.

In a preferred embodiment, at least one locking means (for example, a pin) is provided whereby the range of rotational movement of the user control can be limited to either a predefined maximum or minimum. Two such locking means may be provided whereby rotational movement can be bound within a preset range. In a preferred embodiment, the or each locking means comprises a pin insertable into a formation of the housing, and which carries a formation for obstructing movement of the user control beyond a predetermined maximum and minimum.

An embodiment of the invention will now be described in detail, by way of example, with reference to the accompanying drawings in which:
Figure 1 is a side view of a thermostatic radiator valve having a control head embodying the invention;
Figures 2 and 3 are sectional views of the valve of Figure 1 respectively in an open and a closed condition;
Figure 4 shows in greater detail a cross-sectional view of a body part being a component of the control head of the valve of Figure 1;
Figure 5 shows in greater detail a cross-sectional view of a cover component of the control head of the valve of Figure 1;
Figure 6 shows, in greater detail, and in an upward view, part of the body part of Figure 4 and a detent formation of the cover component of Figure 5;

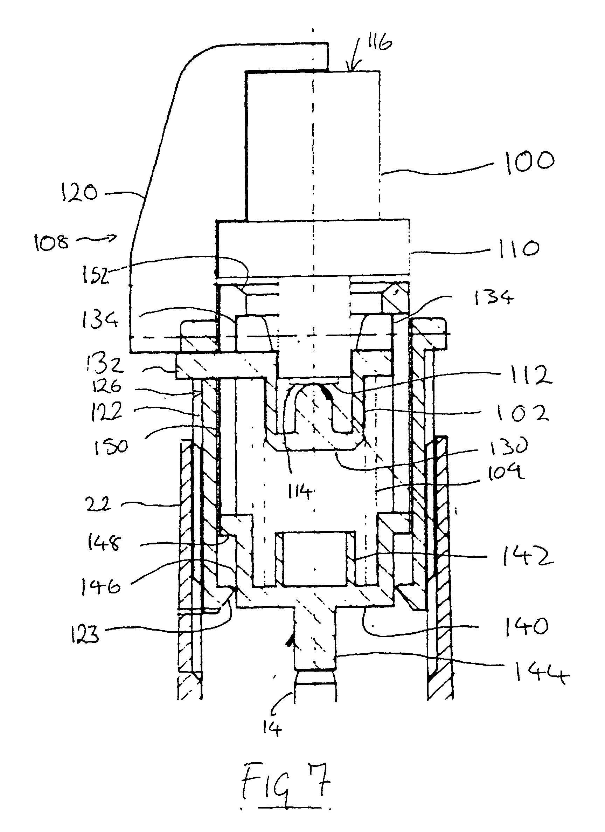

Figures 7 and 8 are enlarged views of a sub-assembly of operative components of the control head of Figure 1, at respectively lower and higher temperatures; and

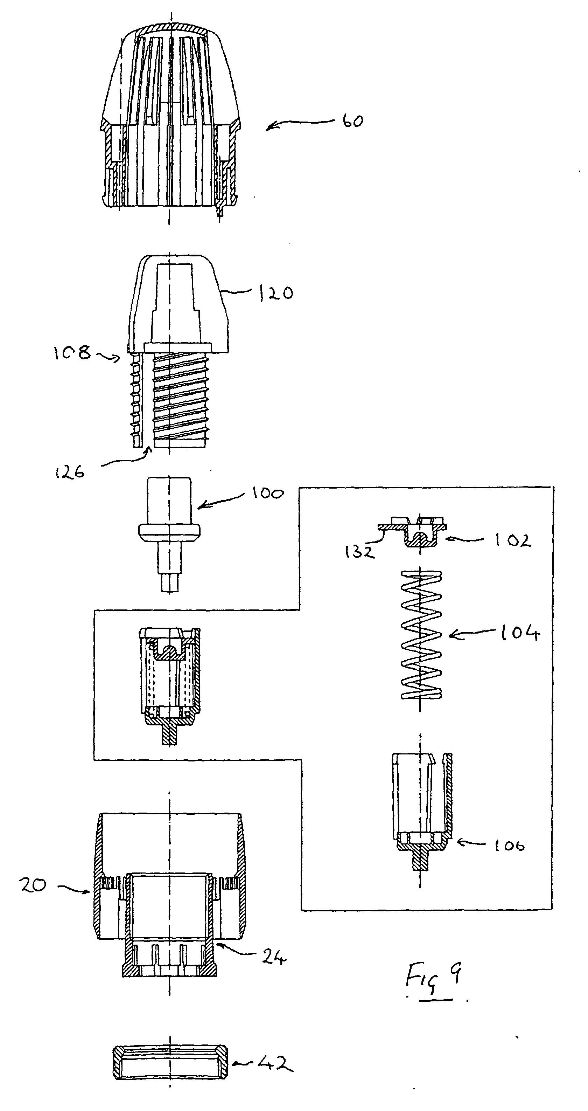

Figure 9 is an exploded view of the control head shown in the preceding figures.

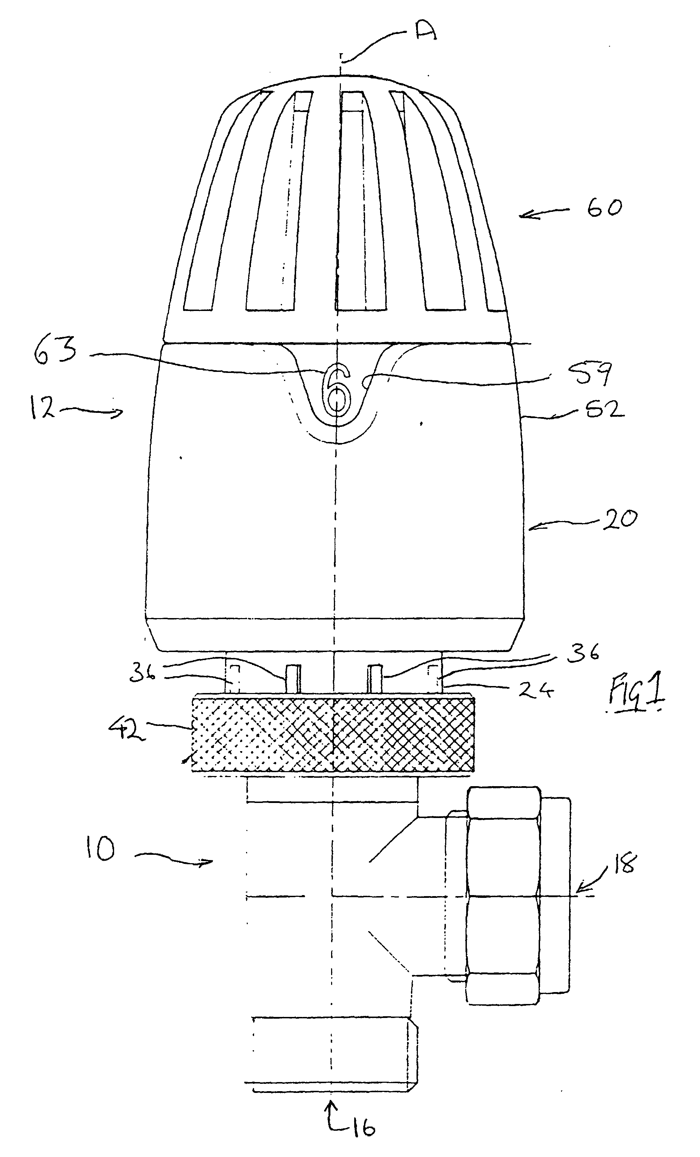

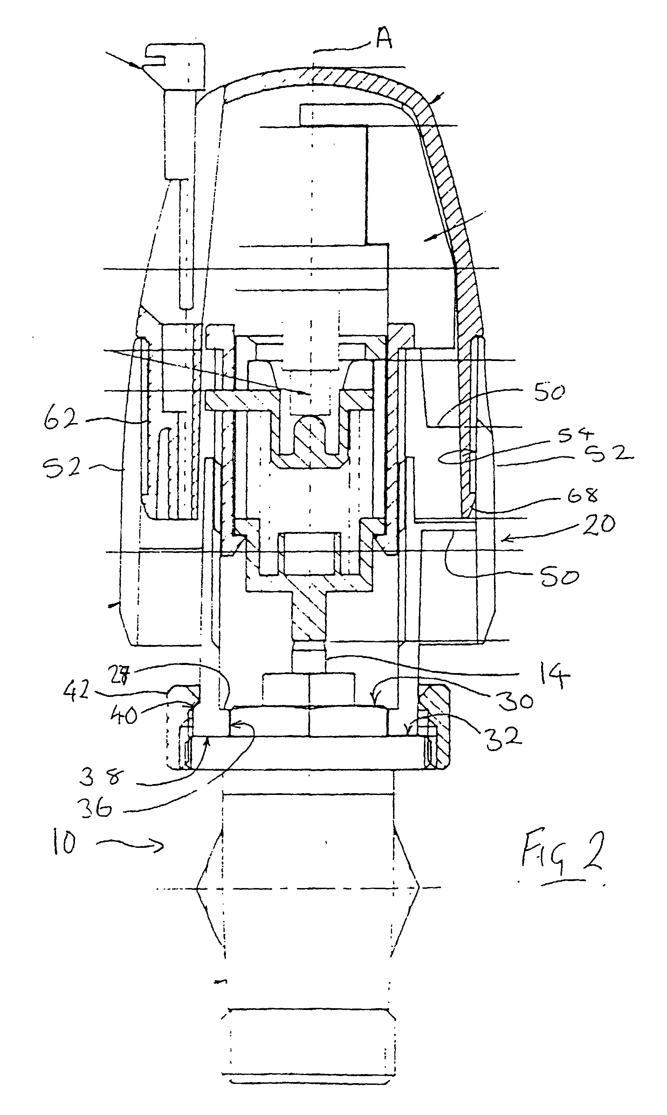

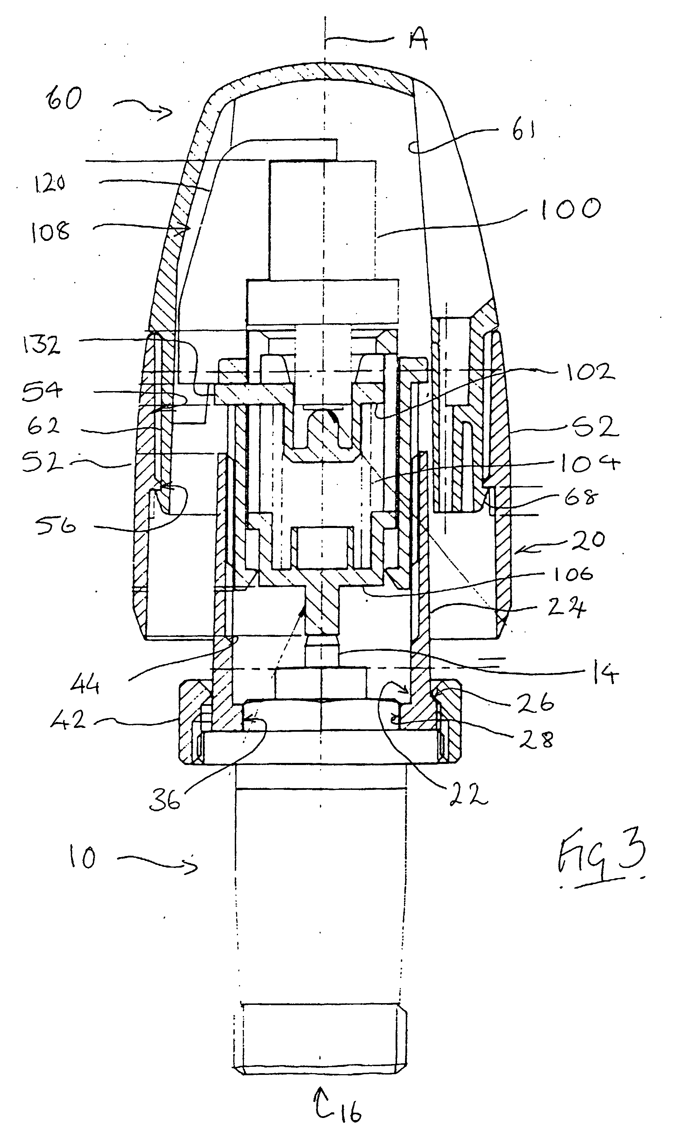

For convenience, the terms "up" and "down" and associated terms such as "upper" and "lower" as used herein refer to the body while in an orientation shown in Figures 1 to 3. However, it should be noted that the device may be used in substantially any orientation as is convenient in a particular installation.

With reference to the drawings, a thermostatic valve comprises a flow valve 10 and a control head 12.

The flow valve 10 is substantially conventional and shall be described only briefly. The flow valve 10 has a body which comprises a water inlet port 16 and a water outlet port 18. The inlet and outlet ports are each connected for use to either a radiator water passage or to a water pipe. The flow valve 10 has an operating pin 14 which projects from an end face of the body of the flow valve along an axis A of the radiator valve. The pin 14 is biased to project from the body, and in this position, the flow valve 10 permits flow of water between its inlet and outlet ports 16,18. Displacement of the pin 14 into the body along the axis A causes the flow valve to close the flow path between its inlet and outlet ports.

A central region 30 (from which the pin 14 projects) of the end face of the body projects axially, and has a polygonal cross-section. Surrounding the central region 30, is a peripheral flange region 32. An outwardly directed peripheral surface of the flange region carries an external thread.

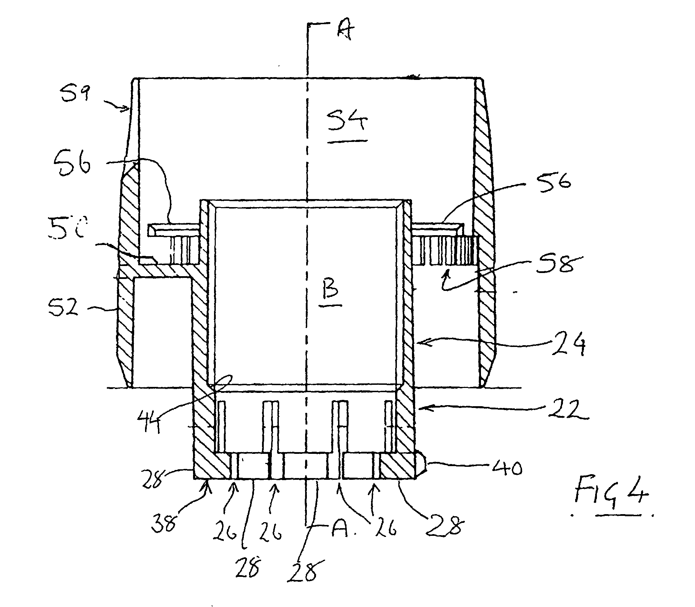

The control head comprises a body 20, shown in detail in Figure 4, which is substantially rotationally symmetrical about the axis A. The body is formed as a unitary injection moulding. The body will now be described in detail.

A tubular core part 24 of the body 20 extends upwardly from a lower end portion (shown generally at 22) which engages an upper part of the flow valve 10. The lower end portion 22 is generally tubular and of cylindrical form. A plurality of circumferentially-spaced slots 26 extend from the lower end of the body 20 axially upwardly through the lower end portion and beyond into the core part 24, so defining a plurality of circumferentially-spaced, vertically extending fingers 28 between adjacent slots 26.

A cylindrical internal surface of the core part 24 is provided with an internal screw thread.

A projection 27 extends radially-inwardly from end portions of each of the fingers 28. The projections together define an axial opening within the lower end portion 22. End surfaces 36 of the projections 27 are shaped such that the opening is polygonally shaped, and dimensioned to fit closely around the central region 30 of the end face of the flow valve body, thereby to prevent mutual rotation of the flow valve and the body 20. End surfaces 38 of the fingers 28 engage the flange region 32 of the end face of the flow valve body to provide a firm axial support for the control head 12.

Each finger 28 carries a radially-outwardly extending projection 40. A nut 42 is provided surrounding the tubular core part 24 of the body 20. The nut has a flange which interacts with the radially-outwardly extending projections 40 to prevent removal of the nut 42 from the core 24 part in a downward direction, unless the fingers 28 are deflected radially inwardly. Since such deflection is prevented by the central region 30 of the end face of the flow valve body while the control head 12 is mounted on a flow valve 10, the nut can be used to secure the control head 12 onto the flow valve 10 by threaded engagement with the outwardly directed peripheral surface of the flange region 32.

Upwardly of the upper ends of the slots 26, the core part 24 has generally cylindrical inner and outer surfaces. Closely above the upper extent of the slots 26, the inner diameter of the inner surface increases by a small amount at a step shown at 44. Above the step, the inner surface of the core part 24 defines within itself a bearing region B which will be described further below.

From the core part 24, four uniformly spaced-apart spars 50 extend radially outwardly from the outer surface of the core part 24, spaced apart around it. Outwardly of the spars 50 and connected to the core part 24 by the spars 50, is a skirt portion 52.

The skirt portion 52 extends upwardly from a height substantially at the height of the step change in diameter (at 44) of the inner surface of the core part 24. The upper extent of the skirt 52 is above the upper extent of the core part 24.

Below the spars 50, space within the skirt 52 is unoccupied, the skirt serving simply to present a uniform external appearance, and to cover from view the outer surface of the core part 24. Importantly, a passage is left open to allow free flow of air in a vertical direction through the body 20. Above the spars 50, the skirt 52 has a generally cylindrical inner wall 54, and an outer wall which has a curved section intended to present a pleasing aesthetic appearance.

Four horizontally-extending projections 56 extend inwardly from the inner wall 54 of the skirt 52, these being disposed circumferentially between the spars (such that, when viewed in plan, the projections 56 and the spars 50 would be seen not to overlap). The projections are disposed above the spars 52. The projections 56 each has an upper surface which is angled downwardly in a direction radially inward from the inner wall 54, and a lower surface which is substantially perpendicular to the inner wall 54.

Directly below the projections 56, a plurality of ribs 58 extend vertically and project a short distance radially inwardly on the inner wall 54. The ribs 58 extend downwardly to a level substantially that of the spars 50.

The uppermost surface of the skirt 52 is, for the greatest part of its circumference, horizontal. At one region of its circumference, a vertically-extending cut-out 59 of curved form extends downwardly into the skirt. 52. As will become clear in due course, the exact shape and size of the cut-out is not of particular importance to the operation of the valve, and will partly be determined by aesthetic considerations.

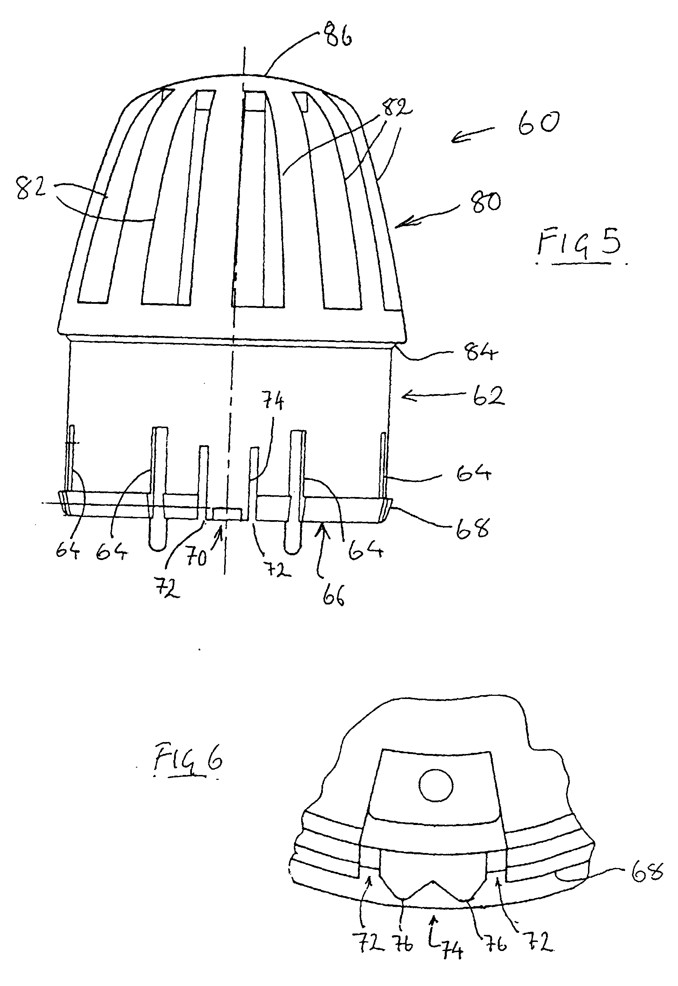

The control head 12 further comprises a cover component 60, shown in Figure 5, which is connected to the body 20. The cover component 60 is formed as a unitary plastics moulding. A lower portion 62 of the cover component 60 is formed as a generally cylindrical tube having a generally cylindrical outer surface. A plurality of slots 64 extend vertically upwardly into the lower portion 62 from a lowermost surface 66 of the cover component 60, so dividing the lower portion 62 into a plurality of vertically extending segments.

Adjacent the lowermost surface 66, there is formed a plurality of radially outward locking projections 68 from the lower portion 62, the locking projections 68 extending circumferentially between adjacent slots 64. The projections 68 have a cross-section which presents a downwardly directed surface having a frusto-conical shape, which tapers downwardly, and an upper surface which is substantially horizontal.

One of the segments of the lower portion 62 of the cover component 60 has a detent formation 70 which extends upwardly from its lowermost surface 66. The detent formation is also shown in Figure 6. The detent formation comprises a pair of spaced slots 72 which extend upwardly into the lower portion 62 from the lowermost surface 66, whereby a tongue of material 74 is defined between them. A lowermost portion of the tongue 74 has a pair of outwardly directed projections 76, these having a triangular cross-sectional shape, aligned parallel with the axis A. The projections 76 project radially to a distance greater than the locking projections 68.

A plurality of visual indicia 63 are disposed spaced around an upper part of the lower portion on its outer surface.

The cover component 60 further comprises an upper portion 80. The upper portion 80 has an outer profile which is shaped to have an upward, curving taper, extending to a domed top surface 86. The particular shape of the outer profile is determined, to a large extent, by aesthetic considerations, subject to its providing a sufficient internal volume to meed the functional requirements, as described below. At its lowest extent, the diameter of the upper portion 80 is greater than the diameter of the outer surface of the lower portion 62, there being a step 84 formed between the upper and lower portions 80,62. A multiplicity of vertically extensive slots 82 are formed through the material of the upper portion 80. The slots 82 are spaced uniformly around the axis A. The slots 82 extend from a small distance above the step 84 to the top surface 86. Adjacent the slots, a plurality of inwardly-directed projections 61 are provided.

The cover component 60 and the body 20 are interconnected by inserting the lower portion 62 into the skirt 52 of the body 20. The lower portion 62 of the cover component 60 and the skirt are dimensioned such that an outer surface of the lower portion 62 is immediately radially inward from an inner surface of the skirt 52, thereby to locate the cover component 60 in place in connection to the body 20.

When the cover component 60 is pushed downwardly onto the body 20, its movement is limited by the step 84 coming into contact with the skirt 52. During the final part of the downward movement, the locking projections 68 on the cover component 60 engage with the projections 56 on the skirt. The curved surfaces of the sets of projections 68,56 contact one another such that the segments of the lower portion 62 are deflected radially inwardly as downward movement continues. Immediately prior to the limit of downward movement, the segments are permitted to spring radially outwardly. The horizontal surfaces of the projections then make contact with one another, so as to prevent separation of the cover component 60 from the body 20. However, mutual rotation of these components is permitted.

It will be understood that when they are interconnected in the above-described manner, the body 20 and the cover component 60 form a housing having a generally hollow interior, within which operative components of the device are housed. These components will now be described.

The operative components are formed as a sub-assembly comprising a sensing element 100, a carrier 102 for the sensing element 100, a helical compression spring 104, an inner housing 106, and an outer housing 108.

The sensing element 100 is a conventional component. It comprises a body 110 from which an actuating pin 112 projects axially. The length of the actuating pin 112 which projects from the body 110 increases as does the temperature of the sensing element 100. Thus, the overall axial length of the sensing element 100 defined between an end surface 114 of the pin and a parallel end surface 116 of the body increases with temperature.

The outer housing 108 is formed as a rotationally-symmetrical integral plastics moulding. An upper part comprises a plurality of webs 120 disposed around the axis A. The webs are interconnected at an upper extremity. Internal surfaces of the webs 120 are shaped to correspond to the shape of the body 110 of the sensing element 100. By this arrangement, the body 110 of the sensing element 100 is retained within the outer housing 108 in such a manner that its end surface 116 is axially fixed with respect to the outer housing 108.

A tubular part 122 extends downwardly from the upper part, the tubular part 122 being generally cylindrical and being coaxial with the axis A. The tubular part 122 has an outer surface on which is provided an external thread 124 suitable for threaded engagement with the internal thread of the core part 24 of the body 20. A slot 126 extends vertically through the tubular part 122. At its lower extent, the tubular part has a plurality of inwardly-directed locking projections 123, each of which presents a sloping lower surface and a horizontal upper surface.

The carrier 102 is disposed within the tubular part of the outer housing 108. The carrier 102 has a central portion 130 which is in contact with the actuating pin 112 of the sensing element 100. The central potion 130 extends downwardly to present a cylindrical outer surface substantially the same diameter as the inner diameter of the spring 104. The carrier 102 has an arm 132 projects radially from the central portion 130, this arm passing through the slot 126 to prevent rotation of the carrier 102 with respect to the outer housing 108. A plurality of lugs 134 extend upwardly from the central portion 130.

The inner housing 106 has a circular base portion 140 from which a short tube 142 projects axially upwardly, the tube 142 having a cylindrical outer surface of substantially the same diameter as the inner diameter of the spring 104. A rod 144 projects axially downwardly from the base portion 140.

A cylindrical wall portion 146 extends upwardly from the periphery of the base portion 140. An annular flange 148 projects radially outwardly from the wall portion 146 at its upper extremity. A plurality of radially-spaced webs 150, extend upwardly from the flange 148. A upper end regions of the webs 150, each is provided with an inwardly-directed projection 152, each of which projection 152 has an inwardly-sloping upper surface and a horizontal lower surface.

In the sub-assembly, the sensing element 100 is located in the outer housing 108. The carrier 102 is then placed in position on the sensing element 100. The spring 104 is placed with one end porion over the tubular part 122 of the outer housing. The inner housing 106 is then positioned such that is webs 150 extend into the outer housing, the projections 152 of the webs each locating upon and being secured by a respective lug 134 of the carrier 102. The inner housing 106 is further secured against removal from the outer housing 108 by the projections 123 of the outer housing engaging and retaining the flange 148.

To assemble the control head 12, the sub-assembly is first constructed as described above. It is then secured within the body 20 by threaded engagement between the outer housing and the core part 24. The cover component 60 is then secured on the body 20, as has previously been described.

In operation, the rod 144 engages the operating pin 14 of the flow valve 10. As temperature increases, actuating pin 112 of the sensing element 100 pushes the carrier 102 downwardly. This compresses the spring 104, so causing the inner housing 106 to be urged downwardly. Once the force of the spring exceeds an operating force of the pin 14 of the flow valve 10, the valve will cut off the flow of water through the radiator.

Rotation of the cover component 60 causes rotation of the outer housing 108, rotational force being transmitted between the projections 61 of the cover component 60 and the webs 120 of the outer housing 108. Such rotation causes axial movement of the outer housing 108 with respect to the body 20, though the action of the threaded interengagement of these components. As the outer housing 108 moves downwardly, the force of the spring 104 will increase for any given length of the sensing element 100, so effectively reducing the temperature at which flow will be cut off by the flow valve.

During rotation of the cover component 60, the projections 76 of its detent formation 70 ride over the ribs 58 of the body 20. This results in periodic resistance to the rotation, with the effect that a user perceives the presence of detent positions in the rotation of the cover component 60. Additionally, the indicia 63 appear into view, in sequence, through the cut-out 59 in the skirt 52, to provide the user with an indication of the temperature which is selected.

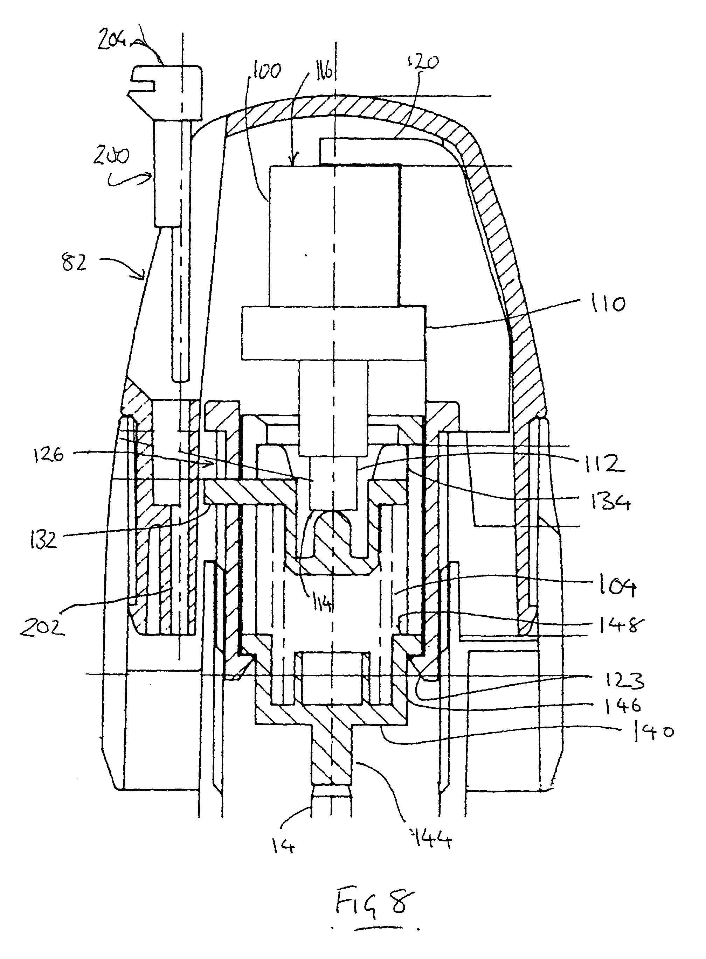

As is shown in Figure 8, one or more locking pins 200 may be provided. The or each pin 200 can be inserted through a slot 82 in the cover component 60 downwardly to be received in one of a plurality of recesses 202 in the lower portion 60 of the cover component 60. The pin 200 has a head 204 with which it can be grasped by a user. Additionally, when the pin 200 is in place, the head 204 projects radially inwardly, such that it prevents rotation of the arm 132 of the carrier past itself. Thus, by positioning one pin 200 suitably, the valve may be limited to either a minimum or a maximum setting. By using two pins 200, the valve can be confined within a specific range.

It will be seen that the present valve control head allows ambient air to reach the temperature sensor transversely through the slots 82 in the cover component 60 and also axially through the spaces defines between the spars 50 of the body.

## Claims

1. A control head for a thermostatic valve comprising:
a housing, within which is contained a sensing element (100) which sensing element has a body and an actuating member, which actuating member is operative to move along an axis (A) with respect to the body in response to change in ambient temperature,
a carrier (102) within the housing,
and a connecting means (42) whereby the housing can be secured to a flow valve,
in which control head the actuating member of the sensing element (100) is operatively connected to the carrier and the actuating member of the sensing element (100) projects from the body such that it can move the carrier (102) to operate a flow valve to which the control head is attached,
and in which control head a user control is rotatable about an axis parallel to or coaxial with the operating axis (A) of the sensing element, such rotation causing linear movement of the carrier parallel to the operating axis but causing substantially no axial movement of the housing with respect to the connecting means,
**characterised in that** the control head has a sub-assembly including an inner housing (106) and an outer housing (108),
wherein the inner housing (106) is secured to the outer housing (108), and the inner and outer housings locate the carrier (102) and sensing element (100) in place in the sub-assembly, wherein the sub-assembly is locatable in the housing.

2. A control head according to claim 1 in which the user control is constituted by a part of the housing.

3. A control head according to claim 2 in which the housing comprises a body and a cover component, interconnected for mutual rotation.

4. A control head according to claim 3 in which a multiplicity of slots is formed in the body adjacent the sensing element.

5. A control head according to claim 3 or claim 4 in which slots are provided in the cover whereby a flow of air through the housing can be established either in an axial direction or in a direction transverse to the axis.

6. A control head according to any preceding claim further comprising at least one locking means whereby the range of rotational movement of the user control can be limited to either a predefined maximum or minimum.

7. A control head according to claim 6 comprising two such locking means whereby rotational movement can be bound within a preset range.

8. A control head according to claim 6 or claim 7 in which the or each locking means includes a pin.

9. A control head according to claim 8 in which the or each pin is insertable into a formation of the housing, and which is provided with a formation for obstructing movement of the user control beyond a predetermined maximum and/or minimum.

10. A control head according to any preceding claim in which the inner housing has a formation in contact with the flow valve.

11. A control head according to any preceding claim wherein a resilient body is located between the carrier and the inner housing.

12. A control head according to claim 11 in which the resilient body is a helical compression spring.

13. A control head according to any preceding claim in which the housing comprises two interconnected plastic mouldings.

14. A control head according to any preceding claim which further comprises a body for location on a flow valve within which body the carrier is supported for linear movement.

## Patentansprüche

1. Steuerungskopf für ein thermostatisches Ventil, umfassend:
ein Gehäuse, in dem ein Meßfühler-Element (100) enthalten ist, das einen Körper und ein Betätigungsglied aufweist, wobei sich das Betätigungsglied als Reaktion auf eine Änderung der Umgebungstemperatur in Bezug auf den Körper entlang einer Achse (A) betätigend bewegt,
einen Träger (102) innerhalb des Gehäuses,
und ein Verbindungsmittel (42), durch das das Gehäuse an einem Strömungsventil befestigt werden kann,
wobei in diesem Steuerungskopf das Betätigungsglied des Meßfühler-Elements (100) wirksam mit dem Träger verbunden ist und das Betätigungsglied des Meßfühler-Elements (100) aus dem Körper vorragt, so dass es den Träger (102) bewegen kann, um ein Strömungsventil zu betätigen, an dem der Steuerungskopf angebracht ist,
und wobei in diesem Steuerungskopf eine Benutzersteuerung um eine Achse drehbar ist, die parallel zur oder koaxial mit der Betätigungsachse (A) des Meßfühler-Elements verläuft, wobei eine solche Rotation eine lineare Bewegung des Trägers parallel zur Betätigungsachse bewirkt, aber im Wesentlichen keine Axialbewegung des Gehäuses in Bezug auf das Verbindungsmittel bewirkt,
**dadurch gekennzeichnet, dass** der Steuerungskopf eine Unteranordnung aufweist, die ein Innengehäuse (106) und ein Außengehäuse (108) umfasst,
worin das Innengehäuse (106) am Außengehäuse (108) befestigt ist und das Innen- und das Außengehäuse den Träger (102) und das Meßfühler-Element (100) in der Unteranordnung in Position halten, worin die Unteranordnung im Gehäuse anordenbar ist.

2. Steuerungskopf nach Anspruch 1, bei dem die Benutzersteuerung aus einem Teil des Gehäuses gebildet ist.

3. Steuerungskopf nach Anspruch 2, bei dem das Gehäuse einen Körper und eine Abdeckungskomponente umfasst, die zur gegenseitigen Drehung miteinander verbunden sind.

4. Steuerungskopf nach Anspruch 3, bei dem im Körper angrenzend an das Meßfühler-Element eine Vielzahl von Schlitzen ausgebildet ist.

5. Steuerungskopf nach Anspruch 3 oder 4, bei dem Schlitze in der Abdeckung vorgesehen sind, wodurch eine Luftströmung durch das Gehäuse entweder in einer axialen Richtung oder in einer Querrichtung zur Achse ausgebildet werden kann.

6. Steuerungskopf nach einem der vorangegangenen Ansprüche, der weiters zumindest ein Arretierungsmittel umfasst, wodurch der Bereich der Rotationsbewegung der Benutzersteuerung entweder auf ein vorbestimmtes Maximum oder Minimum begrenzt werden kann.

7. Steuerungskopf nach Anspruch 6, der zwei derartige Arretierungsmittel umfasst, wodurch Rotationsbewegung innerhalb eines vorbestimmten Bereichs begrenzt werden kann.

8. Steuerungskopf nach Anspruch 6 oder 7, bei dem das oder jedes Arretierungsmittel einen Stift umfasst.

9. Steuerungskopf nach Anspruch 8, bei dem der oder jeder Stift in eine Ausbildung des Gehäuses eingeschoben werden kann, und der mit einer Ausbildung zum Blockieren von Bewegung der Benutzersteuerung über ein vorbestimmtes Maximum und/oder Minimum hinaus versehen ist.

10. Steuerungskopf nach einem der vorangegangenen Ansprüche, bei dem das innere Gehäuse eine Ausbildung aufweist, die mit dem Strömungsventil in Kontakt steht.

11. Steuerungskopf nach einem der vorangegangenen Ansprüche, worin ein elastischer Körper zwischen dem Träger und dem inneren Gehäuse angeordnet ist.

12. Steuerungskopf nach Anspruch 11, bei dem der elastische Körper eine zylindrische Schraubendruckfeder ist.

13. Steuerungskopf nach einem der vorangegangenen Ansprüche, bei dem das Gehäuse zwei miteinander verbundene Kunststoffformkörper umfasst.

14. Steuerungskopf nach einem der vorangegangenen Ansprüche, der weiters einen Körper zur Anordnung auf einem Strömungsventil umfasst, wobei der Träger zur linearen Bewegung innerhalb dieses Körpers gehalten ist.

## Revendications

1. Une tête de réglage pour une vanne thermostatique comprenant :
un boîtier, à l'intérieur duquel est enfermé un élément de détection (100), élément de détection qui présente un corps et un organe d'actionnement, cet organe d'actionnement pouvant fonctionner pour se déplacer le long d'un axe (A) par rapport au corps en réponse à un changement dans la température ambiante,
un support (102) à l'intérieur du boîtier,
et un moyen de liaison (42) par lequel le boîtier peut être fixé à une vanne d'écoulement,
tête de réglage dans laquelle l'organe d'actionnement de l'élément de détection (100) est relié de manière opérationnelle au support et dans laquelle l'organe d'actionnement de l'élément de détection (100) fait saillie du corps de sorte qu'il peut déplacer le support (102) pour actionner une vanne d'écoulement à laquelle est fixée la tête de réglage,
et tête de réglage dans laquelle une commande utilisateur peut tourner autour d'un axe parallèle à l'axe d'actionnement (A) de l'élément de détection ou coaxial à celui-ci, une telle rotation provoquant un mouvement linéaire du support parallèlement à l'axe d'actionnement mais ne provoquant pratiquement pas de mouvement axial du boîtier par rapport au moyen de liaison,
**caractérisée en ce que** la tête de réglage présente un sous-ensemble comprenant un boîtier interne (106) et un boîtier externe (108),
où le boîtier interne (106) est fixé au boîtier externe (108), et où les boîtiers interne et externe logent le support (102) et l'élément de détection (100) en place dans le sous-ensemble, le sous-ensemble pouvant être mis en place dans le boîtier.

2. Une tête de réglage selon la revendication 1 dans laquelle la commande utilisateur est constituée par une partie du boîtier.

3. Une tête de réglage selon la revendication 2 dans laquelle le boîtier comprend un corps et un élément de couvercle, reliés entre eux en vue d'une rotation mutuelle.

4. Une tête de réglage selon la revendication 3 dans laquelle une multiplicité de fentes est formée dans le corps de manière adjacente à l'élément de détection.

5. Une tête de réglage selon la revendication 3 ou la revendication 4 dans laquelle des fentes sont prévues dans le couvercle de sorte qu'un écoulement d'air à travers le boîtier puisse être établi soit dans une direction axiale soit dans une direction transversale à l'axe.

6. Une tête de réglage selon une quelconque revendication précédente comprenant en outre au moins un moyen de verrouillage par lequel il est possible de limiter la gamme du mouvement de rotation de la commande utilisateur soit à un maximum soit à un minimum défini au préalable.

7. Une tête de réglage selon la revendication 6, comprenant deux moyens de verrouillage de ce type par lequel le mouvement de rotation peut être limité à l'intérieur d'une gamme préréglée.

8. Une tête de réglage selon la revendication 6 ou la revendication 7 dans laquelle le moyen de verrouillage ou chaque moyen de verrouillage comprend une broche.

9. Une tête de réglage selon la revendication 8 dans laquelle la broche ou chaque broche peut être insérée dans une formation du boîtier, et qui est munie d'une formation pour empêcher le mouvement de la commande utilisateur au-delà d'un maximum et/ou d'un minimum déterminé à l'avance.

10. Une tête de réglage selon une quelconque revendication précédente dans laquelle le boîtier interne présente une formation en contact avec la vanne d'écoulement.

11. Une tête de réglage selon une quelconque revendication précédente dans laquelle un corps élastique est placé entre le support et le boîtier interne.

12. Une tête de réglage selon la revendication 11 dans laquelle le corps élastique est un ressort hélicoïdal de compression.

13. Une tête de réglage selon une quelconque revendication précédente dans laquelle le boîtier comprend deux moulages interconnectés en matière plastique.

14. Une tête de réglage selon une quelconque revendication précédente qui comprend en outre un corps prévu pour être mis en place sur une vanne d'écoulement, corps à l'intérieur duquel le support est porté en vue d'un mouvement linéaire.
